Europäisches Patentamt

European Patent Office

Office européen des brevets

(11) Numéro de publication : **0 165 910**
**B1**

# (12) FASCICULE DE BREVET EUROPÉEN

(45) Date de publication du fascicule du brevet :
23.11.89

(51) Int. Cl.⁴ : **B 21 D 51/26**

(21) Numéro de dépôt : **85830130.2**

(22) Date de dépôt : **03.06.85**

(54) **Dispositif de façonnage de pièces cylindriques en forme de boîte, applicable à une machine à souder en continu.**

(30) Priorité : **22.06.84 IT 349984**

(43) Date de publication de la demande :
**27.12.85 Bulletin 85/52**

(45) Mention de la délivrance du brevet :
**23.11.89 Bulletin 89/47**

(84) Etats contractants désignés :
**CH DE FR GB LI**

(56) Documents cités :
**US-A- 1 942 466**
**US-A- 2 110 378**
**US-A- 3 150 249**

(73) Titulaire : **CEFIN S.p.A.**
**Via della Liberazione, 10**
**I-40128 Bologna (IT)**

(72) Inventeur : **Pazzaglia, Luigi**
**Via Bellacosta, 28**
**I-40137 Bologna (IT)**

(74) Mandataire : **Lanzoni, Luciano**
**c/o BUGNION S.p.A. Via Farini, 37**
**I-40124 Bologna (IT)**

## Description

La présente invention concerne un dispositif de façonnage, conformément à un étalon, de pièces cylindriques en forme de boîte qui peut être appliqué à une machine à souder en continu.

L'exigence la plus ressentie avec les machines à souder en continu est celle d'avoir une alimentation aussi continue et régulière que possible. Même et surtout dans les machines à souder du genre mentionné ci-dessus cette exigence est fondamentale : en effet une faible variation en plus ou en moins de la vitesse de soudage entraînerait respectivement la fusion de la matière à souder ou bien le non-soudage.

Dans le cas des machines destinées à souder en continu des pièces cylindriques en forme de boîte, plus particulièrement des boîtes à conserve ci-après appelées couramment boîtes, les feuilles de tôle qui formeront la partie cylindrique des boîtes sont avancées le long d'un bras horizontal. Le long de ce bras lesdites feuilles de tôle sont d'abord calandrées puis avancées au moyen d'une chaîne d'entraînement à dents jusqu'au-dessous d'un élément en forme de fourche. Cet élément en fourche saisit les boîtes en les dégageant des dents d'entraînement de la chaîne et les pousse dans un dispositif de façonnage jusqu'à leur engagement avec deux électrodes à disque. Le dispositif de façonnage comporte plusieurs séries de rouleaux conformés disposés sur des circonférences parallèles et l'une de ces séries, normalement la dernière, comporte des rouleaux calibrés définissant à leur intérieur une circonférence dont le diamètre est égal à celui des boîtes à façonner.

Un dispositif comprenant les caractéristiques de la première partie de la revendication 1 est connu du US-A-3 150 249.

D'après le document US-A-3 150 249 on connaît également l'utilisation d'une série de rouleaux de calibrage ayant un seul rouleau entraîné au moyen d'une courroie d'entraînement et deux rouleaux tournant à vide. Les deux électrodes à disque effectuent donc simultanément le soudage et l'avancement des boîtes vers une paire de courroies d'entraînement qui s'occupent d'éloigner les boîtes. Cette distinction entre vitesse d'entraînement des rouleaux de calibrage et des courroies d'entraînement et d'évacuation des boîtes soudées a une incidence négative sur la qualité de la soudure qui en résulte.

Il s'ensuit que le réglage des électrodes à disque, du fait qu'elles doivent remplir lesdites deux fonctions, est très difficile et sujet à des variations.

Comme déjà précisé, les conséquences de ces variations se traduisent par une fusion de la matière formant les feuilles de tôle en cas de ralentissement, c'est-à-dire quand les feuilles restent plus longtemps entre les électrodes, ou par un non-soudage des bords des feuilles en cas de vitesse trop élevée, c'est-à-dire quand les feuilles restent entre les électrodes pendant un temps plus court que celui requis.

Dans les deux éventualités les boîtes ne sont pas complètement soudées et le produit y contenu peut subir des altérations qui, en cas de produits alimentaires, peuvent avoir des conséquences mortelles.

Le but général de la présente invention est donc de mettre en œuvre un dispositif de façonnage dans lequel les feuilles de tôle formant les boîtes sont avancées à une vitesse rigoureusement constante et uniforme.

Un autre but encore de l'invention est de mettre en œuvre un dispositif de façonnage pourvu des caractéristiques précitées qui soit en même temps peu coûteux, fonctionnel et de fonctionnement parfait.

Les buts précités sont atteints par le dispositif selon la revendication 1.

L'avantage le plus important atteint par un dispositif de façonnage de ce type consiste, comme visé, dans l'obtention d'une vitesse d'avancement des feuilles de tôle parfaitement constante et uniforme.

Selon une forme préférée du dispositif de l'invention, un autre avantage consiste en ce que la courroie d'entraînement qui entraîne les rouleaux calibrés augmente le frottement entre les boîtes et les éléments moteurs et donc empêche le glissement des boîtes sur les rouleaux calibrés motorisés.

Une augmentation de ce frottement peut être obtenue également par la présence, selon une autre caractéristique du dispositif en question, des éléments de nettoyage qui s'occupent de maintenir propre la surface des correspondants rouleaux moteurs calibrés.

Ces avantages et caractéristiques du dispositif de façonnage en question ressortiront plus clairement de la description détaillée qui suit d'une forme préférée mais non exclusive de mise en œuvre pratique de l'invention illustrée à l'aide des dessins annexés, dans lesquels :

— la figure 1 est une vue en perspective de face des organes principaux, ayant trait à l'invention, du dispositif de façonnage en question ;

— la figure 2 est une vue en perspective de côté arrière du même dispositif.

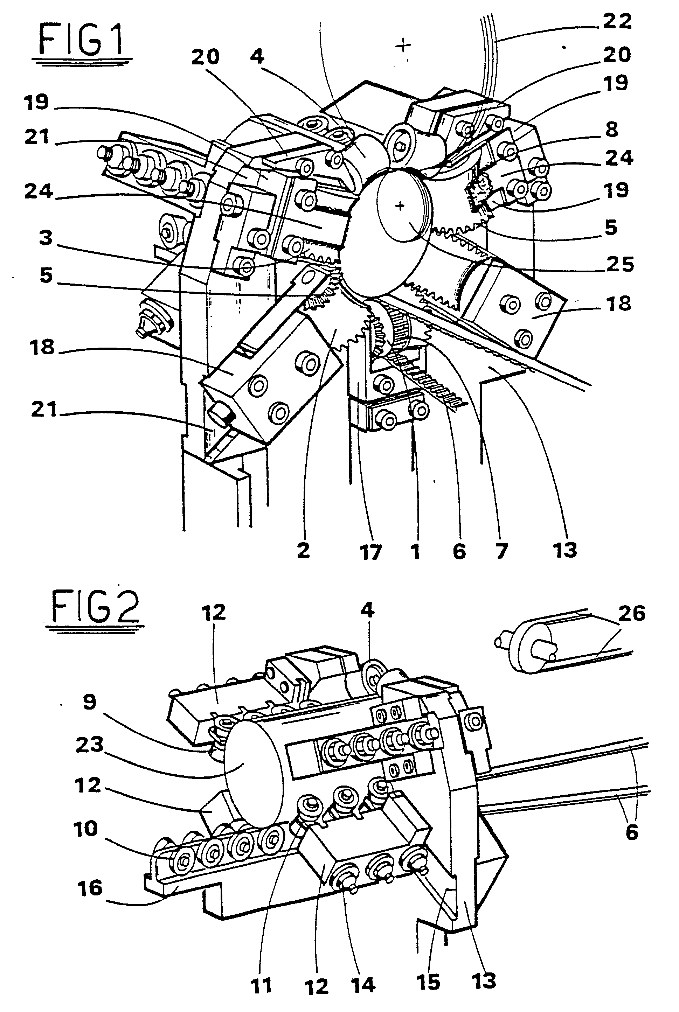

Tel que représenté sur la figure 1, un dispositif de façonnage comporte une série de rouleaux conformés calibrés 1, 2, 3, 4, plusieurs séries de rouleaux conformés de positionnement 9 et une série de rouleaux conformés de support 10. Chaque série de rouleaux de positionnement 9 est disposée dans un plan perpendiculaire à la direction d'avance des boîtes 23 et se compose d'une série de rouleaux disposés symétriquement deux à deux aux deux côtés opposés de l'extrémité d'une tige 11.

Chaque tige 11 traverse l'un de quatre blocs horizontaux 12 supportés en porte-à-faux par une plaque verticale 13 et un ressort correspondant non représenté est enfilé sur ladite tige à l'inté-

rieur du bloc 12. Sur l'autre extrémité, faisant saillie du bloc 12, de chaque tige 11 est vissé un écrou de blocage 14 contrastant l'action dudit ressort intérieur. Chaque bloc 12 est engagé de manière réglable le long d'une rainure de guidage 15 prévue sur la plaque 13.

Les rouleaux de support 10, de forme égale à celle des rouleaux de positionnement 9, sont placés au-dessous de ces derniers et sont disposés symétriquement aux deux côtés opposés du bras vertical d'une poutre horizontale en T renversé 16 supportée en porte-à-faux par la plaque 13.

Les rouleaux de positionnement 9 et ceux de support 10 définissent donc un cylindre de diamètre variable en fonction de la déformation desdits ressorts enfilés sur les tiges 11. Les cylindres définis par ces rouleaux 9 et 10 ont en commun leur génératrice inférieure déterminée par les rouleaux de support 10.

Chacun des rouleaux conformés, calibrés 1, 2, 3, 4, au contraire, est supporté par un bloc correspondant 17, 18, 19 et 20, ces blocs étant à leur tour supportés par la plaque 13 au côté de celle-ci opposée par rapport à celui duquel les blocs 12 et la poutre 16 débordent. Chaque bloc 17, 18, 19 et 20 peut être déplacé de manière réglable perpendiculairement à l'axe du correspondant rouleau calibré 1, 2, 3, 4, le long d'une rainure de guidage 21 ménagée dans la plaque 13.

Les rouleaux calibrés 1, 2 et 3, réciproquement égaux, sont plus grands et inférieurs par rapport aux autres rouleaux calibrés 4, eux aussi réciproquement égaux ; en outre ils sont supportés aux extrémités de bras correspondants des blocs 17, 18 et 19 respectivement, alors que les rouleaux supérieurs sont supportés en porte-à-faux par les correspondants blocs 20. Les blocs calibrés supérieurs 4 sont de dimensions plus petites en vue de permettre le passage entre eux de l'électrode supérieure 22 du dispositif de soudage.

La position des rouleaux calibrés 1, 2, 3 et 4 est définie en alignant le rouleau calibré 1 avec les rouleaux de support 10.

Conformément à la présente invention les rouleaux calibrés 1, 2 et 3 représentés sur les figures du dessin annexé sont motorisés de la manière suivante.

Sur chaque paroi latérale transversale des rouleaux 1 et 2 et sur une seule paroi des rouleaux 3 on a ménagé une denture périphérique 5 de manière que chaque rouleau calibré inférieur 1, 2 ou 3 engrène avec celui ou ceux adjacents.

Dans la zone centrale de la surface calibrée du rouleau inférieur 1 on a au contraire ménagé une denture 7 destinée à s'engager dans la denture d'une courroie dentée 6 motorisée à une vitesse constante égale à celle d'avance des boîtes 23. De cette manière le rouleau calibré 1 est entraîné par la courroie dentée 6 et entraîne à la même vitesse les autres rouleaux calibrés inférieurs 2 et 3.

A chaque bloc 19 est appliquée de manière démontable une plaquette 24 portant à sa partie inférieure un élément en feutre 8 maintenu constamment en contact avec la surface calibrée du respectif rouleau calibré 3.

Pour une meilleure compréhension du fonctionnement on a représenté sur la figure 1 également l'électrode inférieure 25 et sur la figure 2 une courroie 26 disposée au-dessus de celle dentée 6.

Dans un dispositif de façonnage ainsi structuré les boîtes 23 sont avancées en succession jusqu'à leur engagement entre les électrodes 22 et 25. A ce point la boîte concernée est saisie par les rouleaux calibrés 1, 2, 3, 4 et avancée par les rouleaux motorisés 1, 2, 3 pendant que les électrodes 22 et 25 s'occupent de la souder. Immédiatement après ces rouleaux calibrés 1, 2, 3 et 4, la boîte concernée est enlevée par les courroies 6 et 26 qui causent son avancement au-delà du dispositif de façonnage et de celui de coupe, toujours sans l'emploi des électrodes 22 et 25.

Evidemment de nombreuses modifications et améliorations sont possibles, par exemple l'entraînement indépendant de chaque rouleau calibré motorisé 1, 2 et 3, sans sortir du cadre de protection de l'invention tel qu'il est défini dans les revendications qui suivent.

## Revendications

1. Dispositif de façonnage, conformément à un étalon, de pièces cylindriques en forme de boîte (23), à appliquer à une machine à souder en continu et comportant plusieurs séries de rouleaux conformés (1, 2, 3, 4), chaque série de rouleaux étant disposée sur une circonférence définissant une ouverture de passage des boîtes (23), les rouleaux (1 à 4) de l'une au moins desdites séries de rouleaux étant calibrés avec un rouleau (1) entraîné par un moteur, caractérisé en ce que plusieurs rouleaux (1 à 4) de ladite série sont entraînés à une vitesse constante et en ce que ladite série est disposée en amont d'une série de courroies (6, 26) d'entraînement des pièces cylindriques soudées, l'une au moins desdites courroies d'entraînement (6) étant motorisée à une vitesse constante et étant dentée à son intérieur et en ce que l'un desdits rouleaux calibrés motorisés (1) est pourvu sur sa surface calibrée d'une denture (7) destinée à s'engrener et à agir en combinaison avec ladite courroie (6), cette courroie rétablissant la surface calibrée de la zone dentée dudit rouleau calibré motorisé (1).

2. Dispositif de façonnage selon la revendication 1, caractérisé en ce que l'un seulement desdits rouleaux calibrés (1) est entraîné par un moteur et en ce que lesdits rouleaux calibrés motorisés sont pourvus d'une respective denture (5) au moyen de laquelle ils s'engrènent avec le rouleau calibré motorisé adjacent.

3. Dispositif de façonnage selon les revendications 1 et 2, caractérisé en ce qu'un élément de nettoyage (8) est plaqué contre un ou plusieurs desdits rouleaux calibrés motorisés.

## Claims

1. An apparatus for forming cylindrical can bodies (23) applicable to a continuous soldering machine and comprising several series of shaped rollers (1, 2, 3, 4), each series of rollers lying in a circumference defining a passage opening for the can bodies (23), the rollers (1 to 4) of one at least of said series being calibrated with a roller (1) driven by a motor, characterized in that several rollers (1 to 4) of said series are driven at a constant speed and in that said series is disposed upstream of a series of belts (6, 26) carrying along the cylindrical soldered bodies, at least one of said carrying belts (6) being powered at a constant speed and being provided with teeth at the inside thereof and in that one of said gauged powered rollers (1) has a toothing (7) on its gauged surface, which toothing is designed to mesh and operate in combination with said belt (6), said belt restoring the gauged surface of the toothed area of said gauged powered roller (1).

2. An apparatus for forming cylindrical can bodies as claimed in claim 1, characterized in that only one of said gauged rollers (1) is driven by a motor and in that said powered gauged rollers are provided with a respective toothing (5) designed to make them mesh with the adjacent powered gauged roller.

3. An apparatus for forming cylindrical can bodies as claimed in claims 1 and 2, characterized in that a cleaning element (8) is urged against one or more of said powered gauged rollers.

**Patentansprüche**

1. Für eine Schweissmaschine verwendbare Vorrichtung zum Herstellen zylindrischer Behaeltermaentel (23), enthaltend mehrere Serien von profilierten Rollen (1, 2, 3, 4), von denen jede Serie an einem Umfang angeordnet ist und somit eine Durchlassoeffnung fuer den Behaeltermantel (23) bildet, wobei die Rollen (1 bis 4) von wenigstens einer der genannten Rollenserien kalibriert sind, und zwar mit einer durch einen Motor angetriebenen Rolle (1), dadurch gekennzeichnet, dass mehrere Rollen (1 bis 4) der genannten Serie mit einer gleichbleibenden Geschwindigkeit angetrieben sind, und dadurch, dass die genannte Serie vor einer Serie von Antriebsriemen (6, 26) fuer die obengenannten zylindrischen Behaeltermaentel angeordnet ist, wobei wenigstens einer der genannten Antriebsriemen (6) mit einer gleichmaessigen Geschwindigkeit angetrieben wird und an seiner Innenseite verzahnt ist, und dadurch, dass eine der genannten kalibrierten und angetriebenen Rollen (1) an ihrer Oberflaeche mit einer Verzahnung (7) versehen ist, die dazu dient, in den genannten Riemen (6) zu greifen und mit diesem zusammenzuwirken, wobei der genannte Riemen die kalibrierte Oberflaeche des Zahnbereiches der genannten kalibrierten angetriebenen Rolle (1) wiederherstellt.

2. Vorrichtung nach Patentanspruch 1, dadurch gekennzeichnet, dass nur eine der genannten kalibrierten Rollen (1) durch einen Motor angetrieben ist, und dadurch, dass die obengenannten kalibrierten angetriebenen Rollen mit einer entsprechenden Verzahnung (5) versehen sind, durch welche sie in die angrenzende kalibrierte angetriebene Rolle greifen.

3. Vorrichtung nach den Patentanspruechen 1 und 2, dadurch gekennzeichnet, dass ein Reinigungselement (8) gegen eine oder mehrere der genannten Rollen gedrueckt wird.

FIG1

FIG2